Europäisches Patentamt

European Patent Office

Office européen des brevets

(11) Publication number: **0 202 640**
**A2**

# (12) EUROPEAN PATENT APPLICATION

(21) Application number: **86106776.7**

(22) Date of filing: **17.05.86**

(51) Int. Cl.⁴: **H 02 G 3/04**

(30) Priority: **22.05.85 IT 2189285 U**

(43) Date of publication of application:
**26.11.86 Bulletin 86/48**

(84) Designated Contracting States:
**AT BE CH DE FR GB LI LU NL SE**

(71) Applicant: **Elettrocondutture S.p.A.**
**Via dei Valtorta 43/45**
**I-20127 Milano(IT)**

(72) Inventor: **Previdi, Ermanno**
**Via Prospero Finzi 15**
**I-20126 Milano(IT)**

(72) Inventor: **Rienzi, Francesco**
**Via Gran San Bernardo 6**
**I-20154 Milano(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Structure of a junction for connecting electric components to electric cable raceways.**

(57) A junction for connection of electric components to electric cable raceways is peculiar in that it comprises a body (2) having a cutout (3) adapted to be set astride an electric cable raceway. The cited body (2) has, externally of the area affected by said raceway, a head which defines internally a channel (11) for communicating with the raceway, and externally a groove (20) for removable coupling with a window a adapted to be formed in the side surface of the box-type case enclosing (31) an electric component.

FIG. 3

"STRUCTURE OF A JUNCTION FOR CONNECTING ELECTRIC
COMPONENTS TO ELECTRIC CABLE RACEWAYS"

This invention relates to a structure of a junction for connecting electric components to electric cable raceways.

As is known, in the making of electric systems for both domestic and industrial applications, it is current practice to use raceways or channels having a substantially "U"-shaped cross-sectional configuration and through which the various electric supply cables are passed along with any other accessory facilities such as telephone, electronic processor, and the like lines.

Such raceways are covered with a top moulding, and at the locations of the various electric components, such as sockets, switches, pushbuttons, etc., junctions must be provided for connection to the electric cables running inside the raceway.

In known embodiments, that junction has been formed integrally with the box-type body containing the electric component, and resultantly the system's versatility is poor.

Another drawback attributable to prior solutions is that it becomes accordingly necessary to provide a comprehensive type range of box-type bodies to which the junction is connected rigidly, thereby one must have a large number of box-type bodies available for making the connection.

It is the aim of this invention to eliminate such prior drawbacks by providing a standardised junction structure which can be readily applied to any box-type body containing the different electric components, thus affording the advantage of using a single junction for all the box-type bodies.

Within the above aim, it is a particular object of this invention to provide a junction structure which is quick and simpler to attach to the raceway and readily connectable in a stable and safe manner to the various box-type bodies.

Another object of this invention is to provide a junction structure for connecting electric components to electric cable raceways which, by virtue of its peculiar constructional features, can give full assurance of being reliable and safe to use.

A not least object of this invention is to provide a junction structure which can be easily obtained from commercially readily available materials, and be competitive from a purely economical standpoint.

The above aim, and these and other objects to become apparent hereinafter, are achieved by a structure of a junction for connecting electric components to electric cable raceways, according to the invention, characterized in that it comprises a body having a cutout adapted to be set astride an electric cable raceway, said body having, externally of the area affected by said raceway, a head defining internally a communication channel to said raceway and externally, a groove for removable coupling with a window which may be formed in the side surface of the box-type case enclosing an electric component.

Further features and advantages will become apparent from the following detailed description of a junction structure for connecting electric components to electric cable raceways, according to the invention, as shown by way of illustration and not of limitation in the accompanying drawing, wherein:

Figure 1 is a perspective view showing diagrammatically a junction as applied to a raceway with its respective box-type body;

Figure 2 is an exploded perspective view of the junction and one possible conformation of the box-type body;

Figure 3 shows in section the junction and box-type body prior to their coupling; and

Figure 4 shows in section the junction and box-type body as coupled together.

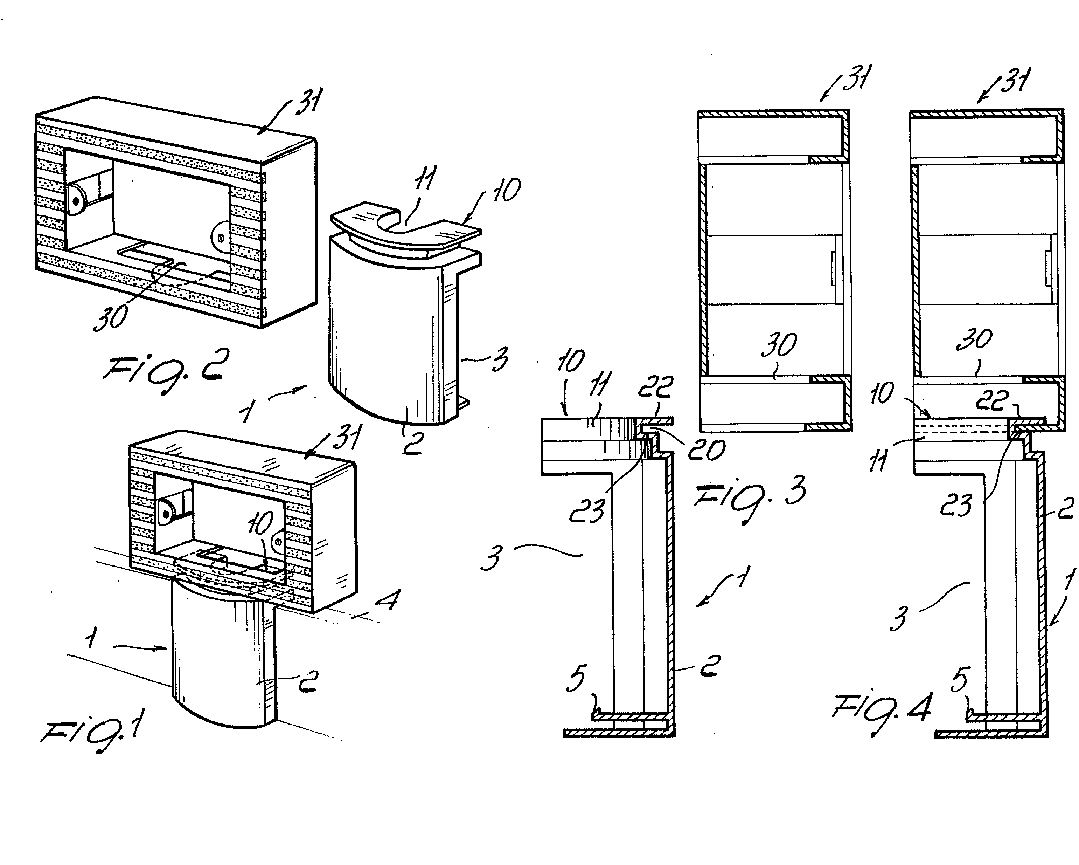

With reference to the cited drawing figures, the structure of a junction for connecting electric components to electric cable raceways or trunking, which is generally designated with the reference numeral 1, has a body 2, which has in its rearward portion a cutout 3 adapted to be superimposed on and settable astride a raceway, generally designated 4 in the accompanying drawing.

The body 2 has on its inward face a tooth or dog 5 for hooking on the raceway.

The peculiarity of the invention is that the junction 1 has, in the area unaffected by said raceway, a head 10 which defines on its interior a throughgoing channel 11 affording communication with the interior of the raceway on which the junction 1 is superimposed and laid substantially transversely.

In its outward portion, the head 10 has a groove 20 which is upwardly delimited by a flange formation 22 of the head itself and downwardly by a step-like detent 23.

Advantageously, the flange 22 and detent 23 are set slightly outwardly divergent from each other to form a tightening zone, as explained herein below.

The groove 20 is engageable in a window 30 which may be formed in the side wall of a box-type body 31 enclosing the electric component, which may have any suitable shape.

Advantageously, to make the system more versatile, the window may be formed in the side wall at pre-selectable locations, because there are provided, on the side wall of the box-type body 31, weakening lines which facilitate removal of the wall portion which defines the window.

Once the window 30 is made, it practically interlocks with the area defined by the groove, thus providing a very stable and reliable tightening, which is facilitated by that, as mentioned above, the flange 22 and detent 23 are slightly convergent toward each other and inwardly, thereby further enhancing the tightening action.

With the arrangement just described, one can have a single junction available which is quickly and removably attachable to any box-type body, making the whole system extremely practical and versatile.

It may be appreciated from the foregoing description that the invention achieves the objects set forth, and in particular that the junction disclosed has the peculiar feature of being an independent entity of the box-type body, having the possibility of effecting quick assembly, or if required, disassembly from the box-type bodies containing the various electric components which make up the system.

In practicing the invention, the materials used, although best results are to be obtained using electrically insulative plastics, and the dimensions and contingent shapes may be any required ones.

## CLAIMS

1. A structure of a junction for connecting electric components to electric cable raceways, characterized in that it comprises a body (2) having a cutout (3) adapted to be set astride an electric cable raceway (4), said body (2) having, externally of the area affected by said raceway (4), a head (10) defining internally a communication channel (11) to said raceway (1) and externally, a groove (20) for removable coupling with a window (30) which may be formed in the side surface of the box-type case (31) enclosing an electric component.

2. A junction structure according to the preceding claim, characterized in that said body (2) defines on its inward face a dog (5) for snap-action coupling with said raceway (4).

3. A junction structure according to the preceding claims, characterized in that said groove (20) is bounded between a flange formation (22) defined by said head (10) and a step-like detent (23) defined by said head (10).

4. A junction structure according to one or more of the preceding claims, characterized in that said groove (20) has a substantially semicircular conformation.

5. A junction structure according to one or more of the preceding claims, characterized in that said flange formation (22) and said step-like detent (23) are convergent toward each other towards the bottom of said groove (20) to act as a tightening element for the edges of said window (30).

Fig. 2

Fig. 3

Fig. 1

Fig. 4

1/1

0202640